# EUROPEAN PATENT SPECIFICATION

(11) **EP 1 260 724 B1**
(45) Date of publication and mention of the grant of the patent: **10.10.2007**
(21) Application number: 01272928.1
(22) Date of filing: 28.12.2001
(51) Int. Cl.: F16C 33/78, F16C 33/80, F04D 29/12, F16J 15/32

(54) **SEALING DEVICE FOR WATER PUMP BEARINGS**
DICHTUNGSEINRICHTUNG FÜR EIN WASSERPUMPENLAGER
JOINT POUR PALIER DE POMPE A EAU

(30) Priority: 28.12.2000 JP 2000400178
(43) Date of publication of application: 27.11.2002
(73) Proprietor: JTEKT Corporation, Osaka-shi Osaka 542-8502 (JP)
(72) Inventor: SAKATA, Yoshizumi, Ikoma-gun, Nara 636-0123 (JP)
(74) Representative: GROSSE BOCKHORNI SCHUMACHER
(86) International application number: PCT/JP2001/011688
(87) International publication number: WO 2002/053930

(56) References cited:
- JP-A- 9 021 397
- JP-U- 4 048 424
- JP-U- 56 066 531
- US-A- 2 639 954
- US-A- 2 819 100
- US-A- 3 363 911
- US-A- 3 550 974
- PATENT ABSTRACTS OF JAPAN vol. 1997, no. 05, 30 May 1997 (1997-05-30) -& JP 09 021397 A (NIPPON SEIKO KK), 21 January 1997 (1997-01-21)

## Description

### Technical Field

The present invention relates to a sealing device for a water pump bearing.

### Background Art

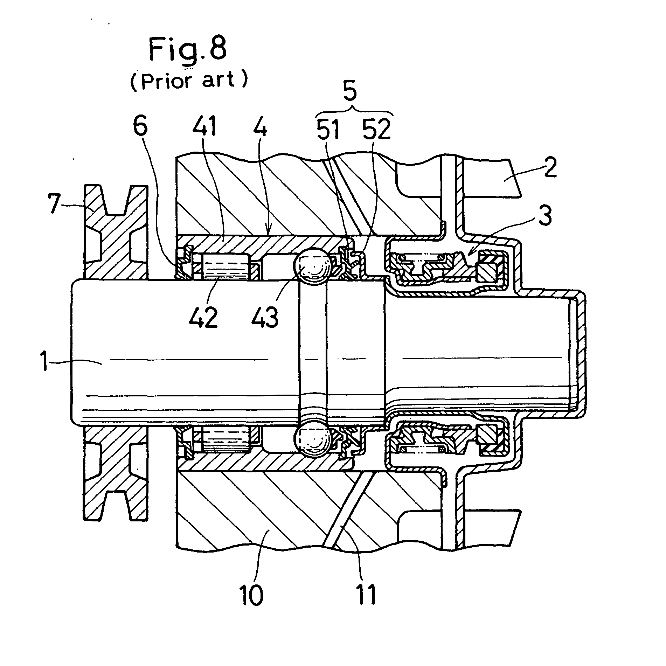

For example, a structure such as shown in Fig. 8 is known as a water pump for circulating cooling water in an automobile engine, or the like.

The water pump comprises a pump shaft 1, an impeller 2, a mechanical seal 3, a water pump bearing 4, sealing devices 5 and 6 for the water pump bearing, a pulley 7, etc. The impeller 2 is attached to one end of the pump shaft 1, and the pulley 7 is attached to the other end. The pump shaft 1 and the impeller 2 are rotated by a belt (a belt which transmits rotation of a crankshaft of an engine) which is wound around the pulley 7, so that cooling water in a pump chamber is sent out.

In the water pump bearing 4, the pump shaft 1 is used as an inner race, and an outer race 41 is externally attached to the outer peripheral face of the inner race via a cylindrical roller group 42 and a ball group 43 serving as rolling elements. The bearing 4 is disposed in a boss portion 10 of a pump housing.

The sealing device 5 which is disposed on the side of one end (on the side of the impeller) in the axial direction of the water pump bearing 4 performs a sealing action so that, even when the cooling water in the pump chamber leaks from the mechanical seal 3, the cooling water does not enter the interior of the water pump bearing 4, thereby allowing the leaking cooling water to be discharged to the outside through a drain hole 11 of the boss portion 10. The sealing device 5 is configured by an annular seal member 51 and an annular slinger 52.

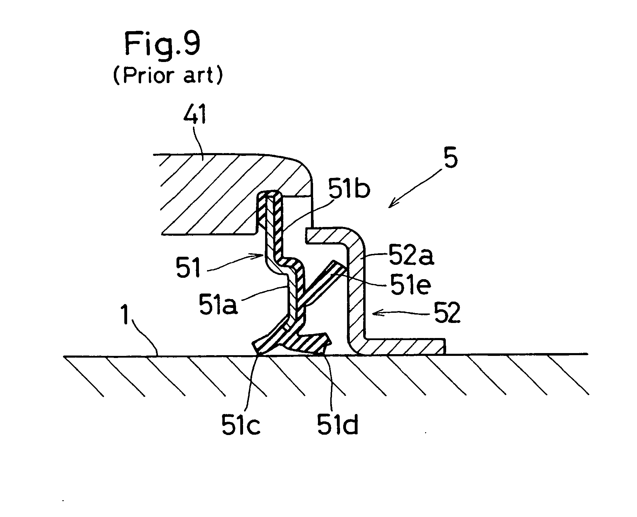

The seal member 51 of the sealing device 5 is fixed to a shoulder portion of one end in the axial direction of the outer race 41, and, as enlargedly shown in Fig. 9, configured by integrally heat bonding an elastic member 51b in which two radial lips 51c and 51d, and one axial lip 51e are formed, and which is made of synthetic rubber or the like, to an annular core 51a. By contrast, the slinger 52 is positioned on the side of the one end (on the side of the impeller) in the axial direction with respect to the seal member 51, and externally fitted and fixed to the outer peripheral face of the pump shaft 1. The axial lip 51e of the seal member 51 is in contact with a disk portion 52a of the slinger 52. The two radial lips 51c and 51d of the seal member 51 are in contact with the outer peripheral face of the pump shaft 1.

In the sealing device 5 of the water pump bearing 4 which is on the side of the impeller, the seal performance is improved by using the seal member 51 of the triple lip type in which the two radial lips 51c and 51d and the one axial lip 51e are disposed. However, the seal member 51 of the triple lip type configured as described above has a complicated structure because it has the axial lip 51e, thereby producing a problem in that the cost is increased.

The invention has been conducted in order to solve the problem. It is an object of the invention to provide a sealing device for a water pump bearing which can exhibit excellent seal performance although using an economical seal member of a simple structure having no axial lip.

The documents JP 09 021 397, US 2,639,954, JP 4-48424 or US 2,819,100 disclose sealings for bearings with different concepts of slingers.

### Disclosure of Invention

In order to attain the object, the invention set forth in claim 1 provides a sealing device on a side of an impeller of a water pump bearing configured by using a pump shaft as an inner race, the impeller being attached to one end of the pump shaft, a pulley being attached to another end, and by externally attaching an outer race via rolling elements to an outer peripheral face of the pump shaft, wherein
the sealing device comprises: an annular seal member having a core which is fixed to a shoulder portion of one end in an axial direction of the outer race; and an annular slinger having an inner cylindrical portion and a disk portion which is extended in a radial direction, the inner cylindrical portion being positioned on a side of the one end in the axial direction with respect to the seal member and externally fitted and fixed to the outer peripheral face of the pump shaft, the seal member has a section shape which is bent along the disk portion of the slinger, and an outer cylindrical portion which is extended from an outer periphery of the disk portion toward the other end in the axial direction, a labyrinth seal portion is formed between the seal member, and the disk portion and the outer cylindrical portion of the slinger, and a radial lip is disposed on an inner periphery of the seal member, whereby, the core of the seal member has a section shape in which an intermediate portion is bent into a substantially U-like shape, so as to extend along the disc portion and the outer cylindrical portion of the slinger.

In the sealing device for a water pump bearing, the economical seal member which is not provided with an axial lip and, which has only a radial lip is fixed to the shoulder portion of the outer race. However, the seal member has a section shape which is bent along the disk portion and the outer cylindrical portion of the slinger, and the labyrinth seal portion is formed between the seal member, and the disk portion and the outer cylindrical portion of the slinger. Although an axial lip is not disposed, therefore, the labyrinth seal portion and the radial lip alone can exhibit sufficient seal performance.

The radial lip of the seal member may be in contact with the outer peripheral face of the pump shaft, or placed in close proximity to the outer peripheral face of the pump shaft so as to form the labyrinth seal portion. Alternatively, the radial lip may be in contact with an outer peripheral face of the inner cylindrical portion of the slinger, or placed in close proximity to the outer peripheral face of the inner cylindrical portion of the slinger so as to form the labyrinth seal portion. In both the cases, excellent seal performance is exhibited by the radial lip and the formed labyrinth seal portion.

The invention set forth in claim 3 provides a sealing device on a side of an impeller of a water pump bearing configured by using a pump shaft as an inner race, the impeller being attached to one end of the pump shaft, a pulley being attached to another end, and by externally attaching an outer race via rolling elements to an outer peripheral face of the pump shaft, wherein
the sealing device comprises: an annular seal member having a core which is fixed to a shoulder portion of one end in an axial direction of the outer race; and an annular slinger having an inner cylindrical portion and a disk portion which is extended in a radial direction, the inner cylindrical portion being positioned on a side of the one end in the axial direction with respect to the seal member and externally fitted and fixed to the outer peripheral face of the pump shaft,
the seal member has a section shape which is bent along the disk portion of the slinger, and an outer cylindrical portion which is extended from an outer periphery of the disk portion toward the other end in the axial direction, an expanded portion of an elastic member is formed in an axial direction of the bent portion, a labyrinth seal portion is formed between the expanded portion, and the disk portion and the outer cylindrical portion of the slinger, and a radial lip is disposed on an inner periphery of the seal member, whereby the core of the seal member has a section shape in which an intermediate portion is bent into a substantially U-like shape, so as to extend along the disk portion and the outer cylindrical portion of the slinger.

In the sealing device for a water pump bearing, the expanded portion disposed in the bent portion of the seal member can increase the distance in the axial direction of the labyrinth seal portion formed between the outer cylindrical portion and the expanded portion, and a process of bending a core constituting the seal member can be easily conducted. As in the sealing device set forth in claim 5, the radial lip of the seal member may be in contact with the outer peripheral face of the pump shaft, or placed in close proximity to the outer peripheral face of the pump shaft so as to form the labyrinth seal portion. Alternatively, as in the sealing device set forth in claim 6, the radial lip may be in contact with an outer peripheral face of the inner cylindrical portion of the slinger, or placed in close proximity to the outer peripheral face of the inner cylindrical portion of the slinger so as to form the labyrinth seal portion. In both the cases, excellent seal performance is exhibited by the radial lip and the formed labyrinth seal portion.

### Brief Description of Drawings

Fig. 1 is a partial section view showing the structure of a water pump into which a sealing device for a water pump bearing of a first embodiment of the invention is incorporated.
Fig. 2 is an enlarged section view of the upper half of the sealing device.
Fig. 3 is an enlarged section view of the upper half of a sealing device for a water pump bearing of a second embodiment of the invention.
Fig. 4 is an enlarged view of a labyrinth seal portion which is formed by a seal member and a slinger in Figs. 2 and 3.
Fig. 5 is an enlarged section view of the upper half of a sealing device for a water pump bearing of a third embodiment of the invention.
Fig. 6 is an enlarged section view of the upper half of a sealing device for a water pump bearing of a fourth embodiment of the invention.
Fig. 7 is an enlarged view of a labyrinth seal portion which is formed by a seal member and a slinger in Figs. 5 and 6.
Fig. 8 is a partial section view showing the structure of a conventional water pump.
Fig. 9 is an enlarged section view of the upper half of a sealing device for a water pump bearing which is incorporated into a water pump.

### Best Mode for Carrying Out the Invention

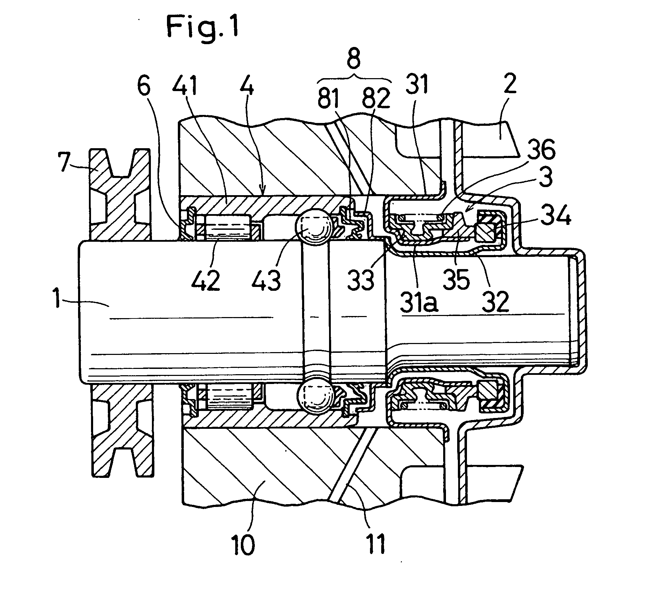

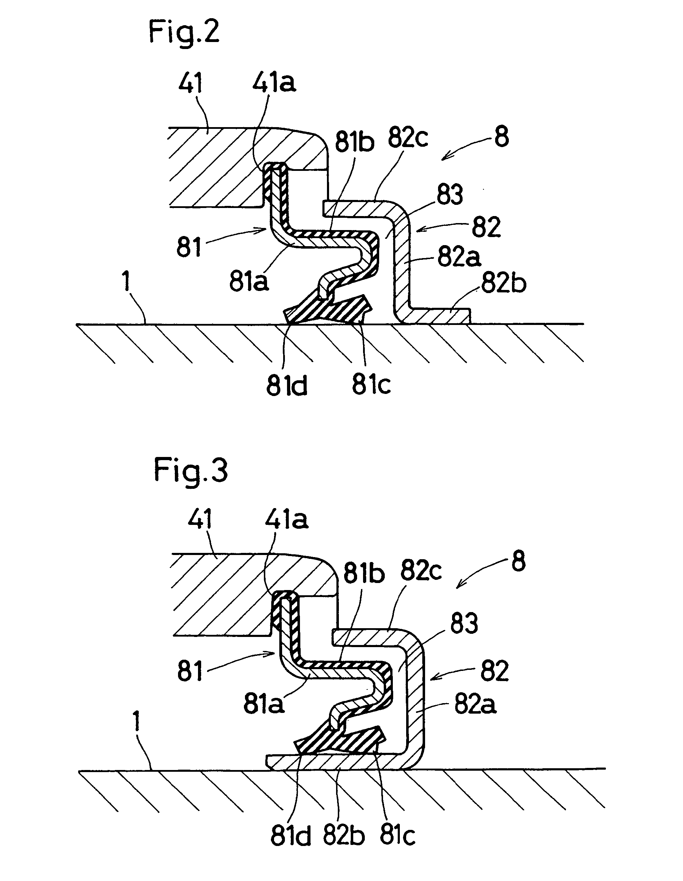

Fig. 1 is a partial section view showing the structure of a water pump into which a sealing device for a water pump bearing of a first embodiment of the invention is incorporated, and Fig. 2 is an enlarged section view of the upper half of the sealing device.

The water pump has the same structure as the above-described conventional water pump, except a sealing device 8 of a water pump bearing 4 on the side of the impeller 2, and comprises a pump shaft 1, an impeller 2, a mechanical seal 3, the water pump bearing 4, sealing devices 6 and 8 for the water pump bearing, a pulley 7, etc.

The pump shaft 1 has a small-diameter portion and a large-diameter portion. The mechanical seal 3 is disposed on the small-diameter portion, and the water pump bearing 4 is disposed on the large-diameter portion. The impeller 2 is attached to one end of the pump shaft 1, and the pulley 7 is attached to the other end. The pump shaft 1 and the impeller 2 are rotated by a belt (a belt which transmits rotation of a crankshaft of an engine) which is wound around the pulley 7, so that cooling water in a pump chamber is sent out.

The mechanical seal 3 is configured by: an outer annular member 31 which is internally fitted and fixed to a boss portion 10 of a pump housing; an inner annular member 32 which is externally fitted and fixed to the small-diameter portion of the pump shaft 1; a rubber sleeve 33 which is externally attached to an inner peripheral cylindrical portion 31a of the outer annular member 31; a rotary ring 34 which is disposed on a portion of the inner annular member 32 on the side of the impeller 2; a fixing ring 35 which is externally fitted to the inner peripheral cylindrical portion 31a of the outer annular member 31 so as to be slidable toward the impeller 2; and a coil spring 36 which is disposed in a compressed state on the outer periphery of the rubber sleeve 33, and which presses the fixing ring 35 against the rotary ring 34.

The water pump bearing 4 is a so-called integral shaft bearing, and uses the pump shaft 1 as an inner race. An outer race 41 is externally attached to the outer peripheral face of the large-diameter portion of the pump shaft 1 via a cylindrical roller group 42 and a ball group 43 which serve as rolling elements, and which are arranged in two rows in the axial direction. The outer race 41 is internally fitted and fixed to the boss portion 10 of the pump housing, and the sealing devices 6 and 8 are attached between the shoulder portions of the both ends in the axial direction of the inner peripheral face of the outer race 41, and the outer peripheral face of the large-diameter portion of the pump shaft 1.

The sealing device 6 on the side of the pulley 7 prevents entering of foreign materials and water from the outside, and is configured by a seal member which is fixed to a shoulder portion on the side of the other end (on the side of the pulley) in the axial direction of the outer race 41. By contrast, the sealing device 8 on the side of the impeller and according to the invention is used for, even when the cooling water leaks from the mechanical seal 3, blocking the cooling water from entering the water pump bearing 4, thereby allowing the cooling water to be discharged through a drain hole 11 of the boss portion 10. The sealing device 8 is configured by a seal member 81 and a slinger 82.

In the slinger 82 of the sealing device 8, as shown in Fig. 2, an inner cylindrical portion 82b is extended from an inner periphery of a disk portion 82a toward the one end (toward the impeller 2) in the axial direction, and an outer cylindrical portion 82c is extended from an outer periphery of the disk portion 82a toward the other end (toward the water pump bearing 4) in the axial direction, so that the slinger has a step-like section shape. The slinger is produced by conducting a pressing process on a rolled steel plate or the like. The slinger 82 is positioned on the side of the one end (on the side of the impeller) in the axial direction with respect to the seal member 81, and externally fitted and fixed to the outer peripheral face of the pump shaft 1. The tip end of the outer cylindrical portion 82c is in close proximity to an end of the outer race 41.

On the other hand, the seal member 81 is configured by integrally heat bonding an annular elastic member 81b in which two radial lips 81c and 81d are formed on the inner periphery, and which is made of synthetic rubber or the like, to an annular core 81a. An outer peripheral edge of the seal member is attached by means of engaging fixation to a shoulder portion 41a in one end of the axial direction of the outer race 41. The seal member 81 has a section shape in which an intermediate portion is bent into a substantially U-like shape so as to extend along the disk portion 82a and the outer cylindrical portion 82c of the slinger 82, whereby a labyrinth 83 of a sufficient length is formed between the seal member 81, and the disk portion 82a and the outer cylindrical portion 82c of the slinger 82. The two radial lips 81c and 81d of the seal member 81 are in contact with the outer peripheral face of the pump shaft 1.

In the thus configured sealing device 8, since the economical seal member 81 of the double lip type having no axial lip is used, the cost can be reduced. Since the labyrinth seal portion 83 of a sufficient length is formed between the seal member 81, and the disk portion 82a and the outer cylindrical portion 82c of the slinger 82, moreover, sufficient seal performance can be ensured by the labyrinth seal portion 83 and the two radial lips 81c and 81d even when an axial lip is not disposed.

In the embodiment described above, the two radial lips 81c and 81d of the seal member 81 are brought into contact with the outer peripheral face of the pump shaft 1. Alternatively, the radial lips 81c and 81d may be placed in close proximity to the outer peripheral face of the pump shaft 1 so that a labyrinth seal portion is formed between the radial lips 81c and 81d and the outer peripheral face of the pump shaft 1. In this case also, excellent seal performance is exhibited by the labyrinth seal portion formed between the radial lips 81c and 81d and the outer peripheral face of the pump shaft 1, and the above-mentioned labyrinth seal portion 83.

Fig. 3 is an enlarged section view of the upper half of a sealing device for a water pump bearing of a second embodiment of the invention.

In the slinger 82 of the sealing device 8, the inner cylindrical portion 82b and the outer cylindrical portion 82c are extended from the inner and outer peripheries of the disk portion 82a toward the other end (toward the water pump bearing 4) in the axial direction, respectively, so that the slinger has a substantially U-like section shape. The slinger is configured so that the two radial lips 81c and 81d on the inner periphery of the seal member 81 are in contact with the outer peripheral face of the inner cylindrical portion 82b.

The other configuration of the sealing device 8 is identical with that of the above-described sealing device. Therefore, the identical components are denoted by the same reference numerals in Fig. 3, and their description is omitted.

In the thus configured sealing device 8 also, since the economical seal member 81 of the double lip type having no axial lip is used, the cost can be reduced. Even when an axial lip is not disposed, sufficient seal performance can be ensured by the labyrinth seal portion 83 which is formed between the seal member 81, and the disk portion 82a and the outer cylindrical portion 82c of the slinger 82, and which has a sufficient length, and the two radial lips 81c and 81d.

In the sealing device also, the radial lips 81c and 81d may be placed in close proximity to the outer peripheral face of the inner cylindrical portion 82b so that a labyrinth seal portion is formed between the radial lips 81c and 81d and the outer peripheral face of the inner cylindrical portion 82b of the slinger, thereby allowing excellent seal performance to be exhibited by the labyrinth seal portion and the above-mentioned labyrinth 83.

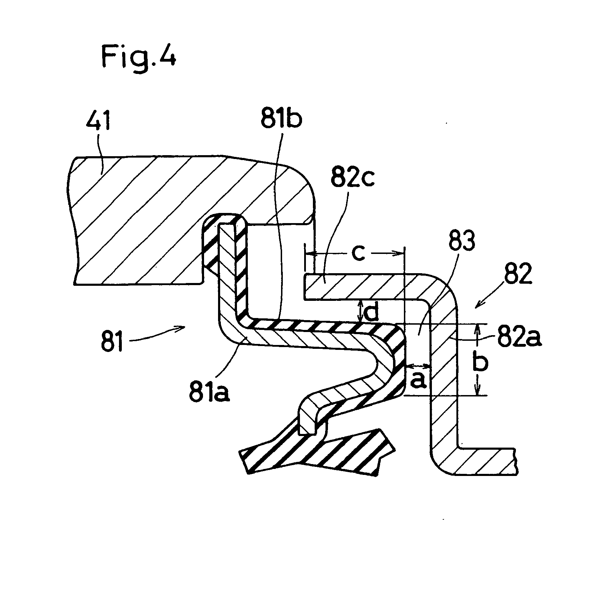

Next, Fig. 4 is an enlarged view of the labyrinth seal portion which is formed by the seal member 81 and the slinger 82 in Figs. 2 and 3. As described above, the labyrinth seal portion 83 is formed between the seal member 81, and the disk portion 82a and the outer cylindrical portion 82c of the slinger 82. In this case, the gap a in the axial direction of the labyrinth seal portion between the elastic member 81b in the axial-direction portion of a substantially U-like shape which is formed in the intermediate portion of the seal member 81, and the disk portion 82a is set to 0.05 to 0.8 mm, preferably, 0.2 mm to 0.8 mm, and the length b in a radial direction of the labyrinth seal portion is set to about 1 mm. Similarly, the length c in the axial direction of the labyrinth seal portion between the elastic member 81b in the lateral-direction portion of a substantially U-like shape which is formed in the intermediate portion of the seal member 81, and the outer cylindrical portion 82c is set to 1 mm or longer, and the gap d in a radial direction of the labyrinth seal portion is set to 0.05 to 1.0 mm, preferably, about 0.2 mm to 1.0 mm. In the portion of the core 81a on the side of the outer periphery of a substantially U-like shape of the seal member 81, a draft angle of about 3° is formed in the direction from the slinger 82 to the bearing 4.

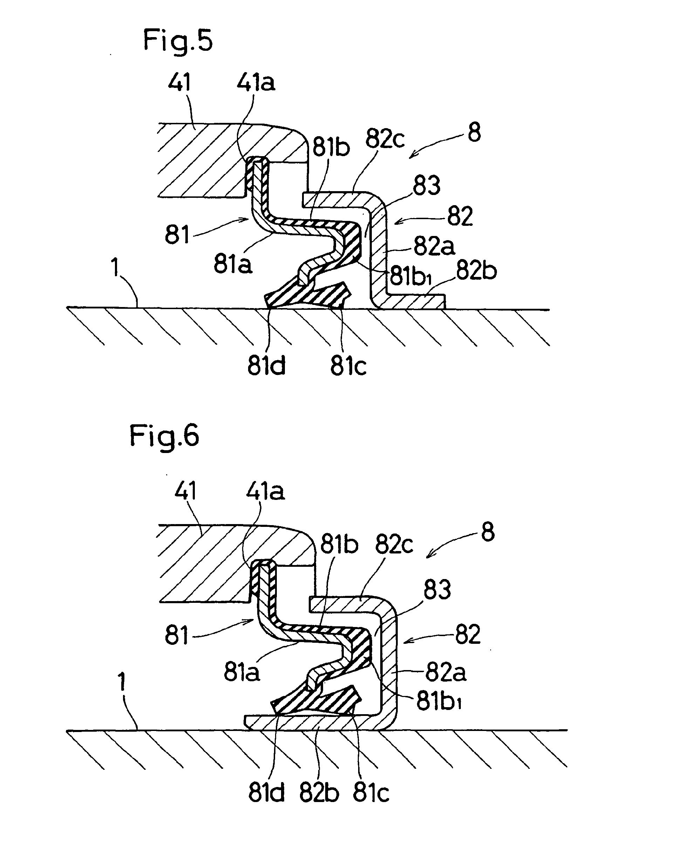

Next, Fig. 5 is an enlarged section view of the upper half of a sealing device for a water pump bearing of a third embodiment of the invention. The embodiment is similar to the first embodiment. In the seal member 81, namely, an intermediate portion is formed so as to have a section shape which is bent into a substantially U-like shape, whereby the labyrinth 83 of a sufficient length is formed between the seal member 81, and the disk portion 82a and the outer cylindrical portion 82c of the slinger 82. In this case, an expanded portion 81b₁ in the axial direction in the elastic member 81b of the substantially U-like shape which is integrally heat bonded to the annular core 81a constituting the seal member 81 is formed to be thick. In order to increase the distance d (see Fig. 4) of the labyrinth seal portion in a radial direction between the elastic member 81b of the seal member 81 and the outer cylindrical portion 82c, the annular core 81a must be extremely bent. Therefore, this is difficult. Consequently, this is substituted with the formation of the axially-thick expanded portion 81b₁ which is the substantially U-like bent portion of the elastic member 81b that is integrally heat bonded to 81a. As a result, a process of bending the core 81a can be easily conducted, and the distance d of the labyrinth seal portion in a radial direction between the elastic member 81b and the outer cylindrical portion 82c can bee easily increased.

Fig. 6 is an enlarged section view of the upper half of a sealing device for a water pump bearing of a fourth embodiment of the invention. The embodiment is similar to the second embodiment. In the slinger 82 of the sealing device 8, namely, the inner cylindrical portion 82b and the outer cylindrical portion 82c are extended from the inner and outer peripheries of the disk portion 82a toward the other end (toward the water pump bearing 4) in the axial direction, respectively, so that the slinger has a substantially U-like section shape. The slinger is configured so that the two radial lips 81c and 81d on the inner periphery of the seal member 81 are in contact with the outer peripheral face of the inner cylindrical portion 82b. In this case also, the axially-thick expanded portion 81b₁ of the bent portion of the substantially U-like shape in the elastic member 81b which is integrally heat bonded to the annular core 81a constituting the seal member 81 is formed. This case also is identical as the above-described third embodiment, and hence description is omitted.

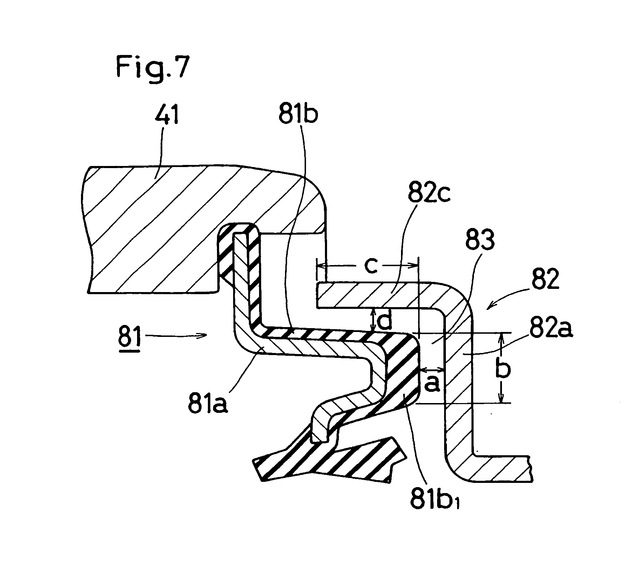

Next, Fig. 7 is an enlarged view of a labyrinth seal portion which is formed by the seal member 81 and the slinger 82 in Figs. 5 and 6. In this case also, the labyrinth seal portion 83 is formed between the seal member 81, and the disk portion 82a and the outer cylindrical portion 82c of the slinger 82. The gap a in the axial direction of the labyrinth seal portion between the elastic member 81b having the expanded portion 81b₁ in the axial-direction portion of a substantially U-like shape which is formed by bending in the intermediate portion of the seal member 81, and the disk portion 82a is set to 0.05 mm to 0.8 mm, preferably, 0.2 mm to 0.8 mm, and the length b in a radial direction of the labyrinth seal portion is set to about 1 mm. The length c in the axial direction of the labyrinth seal portion between the elastic member 81b in the lateral-direction portion which has the expanded portion 81b₁ of a substantially U-like shape, and the outer cylindrical portion 82c is set to 0.5 mm or longer, preferably, 1 mm or longer, and the gap d in a radial direction of the labyrinth seal portion is set to 0.05 to 1.0 mm, preferably, about 0.2 mm to 1.0 mm. In the portion of the core 81a on the side of the outer periphery of a substantially U-like shape of the seal member 81, a draft angle of about 3° is formed in the direction from the slinger 82 to the bearing 4.

In the above-described third and fourth embodiments also, the two radial lips 81c and 81d of the seal member 81 may be placed in close proximity to the outer peripheral face of the pump shaft 1 or that of the inner cylindrical portion 82b so that a labyrinth seal portion is formed between the radial lips and the outer peripheral face. In this case also, excellent seal performance can be exhibited by the labyrinth seal portion formed and the above-mentioned labyrinth seal portion 83.

As apparent from the above description, the sealing device for a water pump bearing of the invention exerts effects that a seal member having no axial lip is used and hence the cost can be reduced, and that, even when an axial lip is not disposed, sufficient seal performance can be ensured by a labyrinth seal portion formed between the seal member, and an annular plate portion and an outer cylindrical portion of a slinger, and a radial lip on the inner periphery of the seal member.

## Claims

1. A sealing device (8) for use on a side of an impeller (2) of a water pump bearing (4) configured by using a pump shaft as an inner race, said impeller (2) being attached to one end of said pump shaft (1), a pulley (7) being attached to another end, and by externally attaching an outer race (41) via rolling elements (42, 43) to an outer peripheral face of said pump shaft, wherein said sealing device(8) comprises:
an annular seal member (81) having a core (81a) which is fixed to a shoulder portion (41 a) of one end in an axial direction of said outer race (41);
and an annular slinger (82) having an inner cylindrical portion (82b) and a disk portion (82a) which is extended in a radial direction, said inner cylindrical portion (82b) being positioned on a side of said one end in the axial direction with respect to said seal member (81) and externally fitted and fixed to said outer peripheral face of said pump shaft (1),
said seal member (81) has a section shape which is bent along said disk portion (82a) of said slinger (82), and an outer cylindrical portion (82c) which is extended from an outer periphery of said disk portion (82a) toward said other end in the axial direction,
a labyrinth seal portion (83) is formed between said seal member (81), and said disk portion (82a) and said outer cylindrical portion (82c) of said slinger (82), and a radial lip(81c, 81d) is disposed on an inner periphery of said seal member
**characterized in that**
the core (81a) of the seal member (81) has a section shape in which an intermediate portion is bent into a substantially U-like shape, so as to extend along the disk portion (82a) and the outer cylindrical portion (82c) of the slinger.

2. A sealing device according to claim 1
having a distance (c) measured in lateral direction, defining the overlapping of the outer cylindrical portion (82c) of the slinger (82) and the annular elastic member (81 b) of the seal member (81) and the distance (c) being set to 1 mm or longer.

3. A sealing device (8) for use on a side of an impeller (2) of a water pump bearing (4) configured by using a pump shaft (1) as an inner race, said impeller (2) being attached to one end of said pump shaft (1), a pulley(7) being attached to another end, and by externally attaching an outer race (41) via rolling elements (42, 43) to an outer peripheral face of said pump shaft (1), wherein
said sealing device (8) comprises:
an annular seal member (81) having a core (81a) which is fixed to a shoulder portion (41 a) of one end in an axial direction of said outer race (41);
and an annular slinger (82) having an inner cylindrical portion (82b) and a disk portion (82a) which is extended in a radial direction, said inner cylindrical portion (82b) being positioned on a side of said one end in the axial direction with respect to said seal member (81) and externally fitted and fixed to said outer peripheral face of said pump shaft (1), said seal member (81) has a section shape which is bent along said disk portion (82a) of said slinger (82), and an outer cylindrical portion (82c) which is extended from an outer periphery of said disk portion (82a) toward said other end in the axial direction, an expanded portion (82b1) of an elastic member (81b) is formed in an axial direction of said bent portion, a labyrinth seal portion (83) is formed between said expanded portion (82b1), and said disk portion (82a) and said outer cylindrical portion (82c) of said slinger (82), and a radial lip(81c, 81d) is disposed on an inner periphery of said seal member (81)
**characterized in that**
the core (81a) of the seal member (81) has a section shape in which an intermediate portion is bent into a substantially U-like shape, so as to extend along the disk portion (82a) and the outer cylindrical portion (82c) of the slinger.

4. A sealing device according to claim 3
having a distance (c) measured in lateral direction, defining the overlapping of the outer cylindrical portion (82c) of the slinger (82) and the annular elastic member (81b) of the seal member (81) and the distance (c) being set to 0,5 mm or longer.

5. A sealing device (8) according to any of the preceding claims, wherein said radial lip (81c,81d) of said seal member (81) is in contact with said outer peripheral face of said pump shaft (1), or placed in close proximity to said outer peripheral face of said pump shaft (1) so as to form said labyrinth seal portion (83).

6. A sealing device (8) according to any one of the preceding claims, wherein said slinger (82) has an inner cylindrical portion (82b) which is extended from an inner periphery of said disk portion (82a) toward said other end in the axial direction, and said radial lip (81 c, 81 d) is in contact with an outer peripheral face of said inner cylindrical portion (82b) of said slinger (82), or placed in close proximity to said outer peripheral face of said inner cylindrical portion (82b) of said slinger (82) so as to form said labyrinth seal portion (83).

## Patentansprüche

1. Abdichtungsvorrichtung (8) zur Verwendung an einer Seite eines Laufrades (2) eines Wasserpumpenlagers (4), konfiguriert durch Verwenden einer Pumpenwelle als innerer Laufring, wobei das Laufrad (2) an dem einen Ende der Pumpenwelle (1) angebracht ist und eine Riemenscheibe (7) an dem anderen Ende angebracht ist, und durch externes Anbringen eines äu-ßeren Laufrings (41) mittels Wälzelementen (42, 43) an einer Außenumfangsfläche der Pumpenwelle, wobei die Abdichtungsvorrichtung (8) aufweist:
ein ringförmiges Abdichtungselement (81), das einen Kern (81 a) aufweist, der an einem Schulterabschnitt (41a) des einen Endes in einer Axialrichtung des äußeren Laufringes (41) befestigt ist;
und einen ringförmigen Schleuderring (82), aufweisend einen inneren zylindrischen Abschnitt (82b) und einen Scheibenabschnitt (82a), der sich in radialer Richtung erstreckt, wobei der innere zylindrische Abschnitt (82b) an einer Seite an dem einen Ende in der axialen Richtung bezüglich dem Abdichtungselement (81) positioniert ist und an der Außenumfangsfläche der Pumpenwelle (1) extern angebracht und befestigt ist,
das Abdichtungselement (81) eine Querschnittform aufweist, die entlang dem Scheibenabschnitt (82a) des Schleuderrings (82) gekrümmt ist, und einen äußeren zylindrischen Abschnitt (82c), der sich von einem Außenumfang des Scheibenabschnittes (82a) zu dem anderen Ende in axialer Richtung erstreckt, ein Labyrinth-Abdichtungsabschnitt (83) zwischen dem Abdichtungselement (81), dem Scheibenabschnitt (82a) und dem äußeren zylindrischen Abschnitt (82c) des Schleuderrings (82) ausgebildet ist, und eine radiale Lippe (81 c, 81 d) am Innenumfang des Abdichtungselementes angeordnet ist,
**dadurch gekennzeichnet, dass**
der Kern (81a) des Abdichtungselementes (81) eine Querschnittform aufweist, bei der ein mittlerer Abschnitt zu einer im Wesentlichen U-artigen Gestalt gekrümmt ist, so dass er sich entlang dem Scheibenabschnitt (82a) und dem äußeren zylindrischen Abschnitt (82c) des Schleuderrings erstreckt.

2. Abdichtungsvorrichtung nach Anspruch 1,
die einen Abstand (c), in seitlicher Richtung gemessen, aufweist, der das Überlappen des äußeren zylindrischen Abschnittes (82c) des Schleuderrings (82) und des ringförmigen elastischen Elementes (81b) des Abdichtungselementes (81) definiert, und der Abstand (c) auf 1 mm oder mehr festgelegt ist.

3. Abdichtungsvorrichtung (8) zur Verwendung an einer Seite eines Laufrades (2) eines Wasserpumpenlagers (4), konfiguriert durch Verwenden einer Pumpenwelle (1) als innerer Laufring, wobei das Laufrad (2) an dem einen Ende der Pumpenwelle (1) angebracht ist und eine Riemenscheibe (7) an dem anderen Ende angebracht ist, und durch externes Anbringen eines äu-ßeren Laufrings (41) mittels Wälzelementen (42, 43) an einer Außenumfangsfläche der Pumpenwelle, wobei
die Abdichtungsvorrichtung (8) aufweist:
ein ringförmiges Abdichtungselement (81), das einen Kern (81 a) aufweist, der an einem Schulterabschnitt (41 a) des einen Endes in einer Axialrichtung des äußeren Laufringes (41) befestigt ist;
und einen ringförmigen Schleuderring (82), aufweisend einen inneren zylindrischen Abschnitt (82b) und einen Scheibenabschnitt (82a), der sich in radialer Richtung erstreckt, wobei der innere zylindrische Abschnitt (82b) an einer Seite an dem einen Ende in der axialen Richtung bezüglich dem Abdichtungselement (81) positioniert ist und an der Außenumfangsfläche der Pumpenwelle (1) extern angebracht und befestigt ist, das Abdichtungselement (81) eine Querschnittform aufweist, die entlang dem Scheibenabschnitt (82a) des Schleuderrings (82) gekrümmt ist, und einen äußeren zylindrischen Abschnitt (82c), der sich von einem Außenumfang des Scheibenabschnittes (82a) zu dem anderen Ende in axialer Richtung erstreckt, ein erweiteter Abschnitt (82b1) eines elastischen Elementes (81b) in axialer Richtung des gekrümmten Abschnittes ausgebildet ist, ein Labyrinth-Abdichtungsabschnitt (83) zwischen dem erweiteten Abschnitt (82b1), dem Scheibenabschnitt (82a) und dem äußeren zylindrischen Abschnitt (82c) des Schleuderrings (82) ausgebildet ist, und eine radiale Lippe (81c, 81 d) am Innenumfang des Abdichtungselementes (81) angeordnet ist,
**dadurch gekennzeichnet, dass**
der Kern (81 a) des Abdichtungselementes (81) eine Querschnittform aufweist, bei der ein mittlerer Abschnitt zu einer im Wesentlichen U-artigen Gestalt gekrümmt ist, so dass er sich entlang dem Scheibenabschnitt (82a) und dem äußeren zylindrischen Abschnitt (82c) des Schleuderrings erstreckt.

4. Abdichtungsvorrichtung nach Anspruch 3,
die einen Abstand (c), in seitlicher Richtung gemessen, aufweist, der das Überlappen des äußeren zylindrischen Abschnittes (82c) des Schleuderrings (82) und des ringförmigen elastischen Elementes (81b) des Abdichtungselementes (81) definiert, und der Abstand (c) auf 0,5 mm oder mehr festgelegt ist.

5. Abdichtungsvorrichtung (8) nach einem der vorhergehenden Ansprüche, bei welcher die radiale Lippe (81 c, 81 d) des Abdichtungselementes (81) mit der Außenumfangsfläche der Pumpenwelle (1) in Kontakt ist, oder in enger Nachbarschaft zu der Außenumfangsfläche der Pumpenwelle (1) platziert ist, so dass der Labyrinth-Abdichtungsabschnitt (83) gebildet wird.

6. Abdichtungsvorrichtung (8) nach einem der vorhergehenden Ansprüche, bei welcher der Schleuderring (82) einen inneren zylindrischen Abschnitt (82b) aufweist, der sich von einem Innenumfang des Scheibenabschnittes (82a) zu dem anderen Ende hin in axialer Richtung erstreckt, und sich die radiale Lippe (81 c, 81 d) in Kontakt mit einer Außenumfangsfläche des inneren zylindrischen Abschnittes (82b) des Schleuderrings (82) befindet, oder in enger Nachbarschaft zu der Außenumfangsfläche des inneren zylindrischen Abschnitte (82b) des Schleuderringes (82) platziert ist, so dass der Labyrinth-Abdichtungsabschnitt (83) gebildet wird.

## Revendications

1. Joint **(8)** pour une utilisation sur un côté d'une hélice **(2)** d'un palier **(4)** de pompe à eau configuré en utilisant un arbre de pompe en tant que bague de roulement intérieure, ladite hélice **(2)** étant fixée à une extrémité dudit arbre **(1)** de pompe, une poulie **(7)** étant fixée à une autre extrémité, et en fixant extérieurement une bague **(41)** de roulement extérieure par des éléments **(42, 43)** de roulement à une face périphérique extérieure dudit arbre de pompe, dans lequel ledit joint **(8)** comprend :
un élément **(81)** de joint annulaire ayant un noyau **(81a)** qui est fixé à une partie **(41a)** en épaulement d'une extrémité dans une direction axiale de ladite bague **(41)** de roulement extérieure ;
et un déflecteur annulaire **(82)** ayant une partie cylindrique intérieure **(82b)** et une partie **(82a)** de disque qui s'étend dans une direction radiale, ladite partie cylindrique intérieure **(82b)** étant positionnée sur un côté de ladite extrémité dans la direction axiale par rapport audit élément **(81)** de joint, et adaptée et fixée de manière extérieure à ladite face périphérique extérieure dudit arbre **(1)** de pompe,
ledit élément **(81)** de joint a une forme de section qui est courbée le long de ladite partie **(82a)** de disque dudit déflecteur **(82),** et une partie cylindrique extérieure **(82c)** qui s'étend d'une périphérie extérieure de ladite partie **(82a)** de disque vers ladite autre extrémité dans la direction axiale, une partie **(83)** de joint à labyrinthe est formée entre ledit élément **(81)** de joint, et ladite partie **(82a)** de disque et ladite partie cylindrique extérieure **(82c)** dudit déflecteur **(82),** et une lèvre radiale **(81c, 81d)** est disposée sur une périphérie intérieure dudit élément de joint, **caractérisé en ce que** le noyau **(81a)** de l'élément **(81)** de joint a une forme de section dans laquelle une partie intermédiaire est courbée en une forme sensiblement en U, de façon à s'étendre le long de la partie **(82a)** de disque et de la partie cylindrique extérieure **(82c)** du déflecteur.

2. Joint selon la revendication 1, ayant une distance **(c)** mesurée dans une direction latérale, définissant le chevauchement de la partie cylindrique extérieure **(82c)** du déflecteur **(82)** et de l'élément élastique annulaire **(81b)** de l'élément **(81)** de joint et la distance **(c)** étant réglée à 1 mm ou plus longue.

3. Joint **(8)** pour une utilisation sur un côté d'une hélice **(2)** d'un palier **(4)** de pompe à eau configuré en utilisant un arbre **(1)** de pompe en tant que bague de roulement intérieure, ladite hélice **(2)** étant fixée à une extrémité dudit arbre **(1)** de pompe, une poulie **(7)** étant fixée à une autre extrémité, et reliant extérieurement une bague **(41)** de roulement extérieure par des éléments **(42, 43)** de roulement à une face périphérique extérieure dudit arbre **(1)** de pompe, dans lequel :
ledit joint **(8)** comprend :
un élément **(81)** de joint annulaire ayant un noyau **(81a)** qui est fixé à une partie **(41a)** en épaulement d'une extrémité dans une direction axiale de ladite bague **(41)** de roulement extérieure ;
et un déflecteur annulaire **(82)** ayant une partie cylindrique extérieure **(82b)** et une partie **(82a)** de disque qui s'étend dans une direction radiale, ladite partie cylindrique intérieure **(82b)** étant positionnée sur un côté de ladite extrémité dans la direction axiale par rapport audit élément **(81)** de joint et, adaptée et fixée extérieurement à ladite face périphérique extérieure dudit arbre **(1)** de pompe, ledit élément **(81)** de joint a une forme de section qui est courbée le long de ladite partie **(82a)** de disque dudit déflecteur **(82),** et une partie cylindrique extérieure **(82c)** qui s'étend d'une périphérie extérieure de ladite partie **(82a)** de disque vers ladite autre extrémité dans la direction axiale, une partie étendue **(82b1)** d'un élément élastique **(81b)** est formée dans une direction axiale de ladite partie courbée, une partie (83) de joint à labyrinthe est formée entre ladite partie étendue **(82b1),** et ladite partie **(82a)** de disque et ladite partie cylindrique extérieure **(82c)** dudit déflecteur **(82),** et une lèvre radiale **(81c, 81d)** est disposée sur une périphérie intérieure dudit élément **(81)** de joint, **caractérisé en ce que** le noyau **(81a)** de l'élément **(81)** de joint a une forme de section dans laquelle une partie intermédiaire est courbée en une forme sensiblement en U, de façon à s'étendre le long de la partie **(82a)** de disque et de la partie cylindrique extérieure **(82c)** du déflecteur.

4. Joint selon la revendication 3, ayant une distance **(c)** mesurée dans une direction latérale, définissant le chevauchement de la partie cylindrique extérieure **(82c)** du déflecteur **(82)** et de l'élément élastique annulaire **(81b)** de l'élément **(81)** de joint et la distance (c) étant réglée à 0,5 mm ou plus longue.

5. Joint **(8)** selon l'une quelconque des revendications précédentes, dans lequel ladite lèvre radiale **(81c, 81d)** dudit élément **(81)** de joint est en contact avec ladite face périphérique extérieure dudit arbre **(1)** de pompe, ou placée en proximité proche de ladite face périphérique extérieure dudit arbre **(1)** de pompe de façon à former ladite partie **(83)** de joint à labyrinthe.

6. Joint **(8)** selon l'une quelconque des revendications précédentes, dans lequel ledit déflecteur **(82)** a une partie cylindrique intérieure **(82b)** qui s'étend d'une périphérie intérieure de ladite partie **(82a)** de disque vers ladite autre extrémité dans la direction axiale, et ladite lèvre radiale **(81c, 81d)** est en contact avec une face périphérique extérieure de ladite partie cylindrique intérieure **(82b)** dudit déflecteur **(82),** ou placée en proximité proche de ladite face périphérique extérieure de ladite partie cylindrique intérieure **(82b)** dudit déflecteur **(82)** de façon à former ladite partie **(83)** de joint à labyrinthe.
